# FASCICULE DE BREVET EUROPEEN

(11) **EP 3 420 198 B1**
(45) Date de publication et mention de la délivrance du brevet: **20.05.2020**
(21) Numéro de dépôt: 17710779.4
(22) Date de dépôt: 20.02.2017
(51) Int. Cl.: F01D 9/04, F02C 9/18, F01D 25/24

(54) **REDRESSEUR POUR COMPRESSEUR DE TURBOMACHINE D'AERONEF, COMPRENANT DES ORIFICES DE PRELEVEMENT D'AIR DE FORME ETIREE SELON LA DIRECTION CIRCONFERENTIELLE**
STATORANORDNUNG FÜR TURBOMASCHINENVERDICHTER EINES FLUGZEUGS MIT LUFTABSAUGUNGSÖFFNUNGEN MIT GESTRECKTER FORM IN UMFANGSRICHTUNG
FLOW-STRAIGHTENER FOR AIRCRAFT TURBOMACHINE COMPRESSOR, COMPRISING AIR EXTRACTION OPENINGS HAVING A STRETCHED FORM IN THE PERIPHERAL DIRECTION

(30) Priorité: 24.02.2016 FR 1651509
(43) Date de publication de la demande: 02.01.2019
(73) Titulaire: Safran Aircraft Engines, 75015 Paris (FR)
(72) Inventeur: LEMAIRE, Clément, Simon, Martin, 77550 Moissy-Cramayel (FR)
(74) Mandataire: Brevalex
(86) Numéro de dépôt international: PCT/FR2017/050374
(87) Numéro de publication internationale: WO 2017/144805

(56) Documents cités:
- EP-A2- 1 793 088
- WO-A1-2009/154517
- FR-A1- 2 929 983
- GB-A- 744 548

## Description

### DOMAINE TECHNIQUE

La présente invention se rapporte à une turbomachine d'aéronef, de préférence du type turboréacteur ou turbopropulseur.

Plus particulièrement, l'invention concerne un redresseur de compresseur de la turbomachine, comportant une virole intérieure, une virole extérieure ainsi que des aubes de stator solidarisées aux deux viroles.

### ETAT DE LA TECHNIQUE ANTERIEURE

Les turbomachines sont équipées de compresseurs réalisés par l'alternance de roues mobiles et de roues fixes, ces dernières étant communément appelées « redresseurs ». En plus des aubes de stator et des deux viroles, chaque redresseur comporte un flasque solidaire d'une extrémité aval de la virole extérieure, ce flasque étant destiné à être fixé sur un carter de compresseur de la turbomachine.

Habituellement, le flasque est traversé par des orifices de prélèvement d'air espacés les uns des autres selon la direction circonférentielle du redresseur. Ainsi, un faible débit d'air peut s'échapper de la veine primaire traversant le compresseur, en transitant par le jeu axial entre le redresseur et la roue mobile directement consécutive vers l'aval. Ensuite, le débit d'air prélevé peut circuler à travers les orifices de prélèvement du flasque, puis rejoindre d'autres éléments de la turbomachine en vue de leur ventilation et/ou de leur alimentation en air, afin de garantir le bon fonctionnement de la turbomachine.

Le flasque équipé des orifices de prélèvement circulaires est donc solidaire de la virole extérieure, elle-même solidaire de la tête des aubes de stator. A titre d'exemple, pour maintenir les aubes de stator qui s'étendent radialement vers l'intérieur à partir de la virole extérieure, celle-ci comprend habituellement une pluralité d'ajours espacés circonférentiellement les uns des autres, et réalisés traversants, à savoir chacun pratiqué dans l'épaisseur de la virole, généralement métallique. Chaque ajour loge la tête de l'une des aubes de stator, cette tête étant fixée à la virole extérieure à l'aide d'une brasure pratiquée dans l'ajour concerné, s'étendant de manière continue tout autour de la tête d'aube. Une fixation analogue peut être prévue entre le pied des aubes de stator et la virole intérieure du redresseur.

Une autre conception possible réside dans la fabrication de chaque secteur de redresseur d'un seul tenant, par exemple par fonderie à cire perdue.

Quelle que soit la conception retenue, il existe un risque d'apparition prématurée de criques au niveau du bord de fuite de la tête des aubes. L'explication de ce phénomène, néfaste pour la durée de vie des aubes de stator, réside dans la présence de charges statiques / dynamiques très importantes au niveau du bord de fuite de la tête d'aube, qui se traduisent par une marge dynamique trop faible, favorisant l'apparition de criques.

Pour faire face à cet inconvénient, il a été proposé d'épaissir la virole extérieure de manière à limiter ses déformations en fonctionnement, et donc à réduire les contraintes appliquées aux bords de fuite des têtes d'aubes. Néanmoins, cette solution est extrêmement pénalisante en termes de coût et de masse.

Il a également été proposé d'épaissir les aubes, mais cela conduit inévitablement à une perturbation du flux d'air les traversant, avec pour conséquence un impact négatif direct sur les performances globales de la turbomachine.

Dans le document FR 2 945 331, il a également été proposé d'associer, à chaque ajour logeant une tête d'aube, une fente de déchargement mécanique pratiquée traversante sur la virole extérieure. La fente présente par exemple une forme générale de U ou de V, assimilable à une forme de fer à cheval, ce qui permet de dégager de la marge dynamique et donc de retarder l'apparition de criques. Dans cette solution, lors de la déformation de la virole extérieure en fonctionnement, la zone fortement chargée est déportée au niveau des extrémités de la fente de déchargement, à savoir à distance du bord de fuite, au sein même de la virole extérieure qui est largement capable de supporter ce chargement. Cependant, la présence de ces fentes de déchargement mécanique génère des perturbations aérodynamiques du flux primaire traversant le redresseur.

Le document FR 2 929 983 divulgue un distributeur selon l'art antérieur pour une turbine et non pas pour un compresseur.

Il subsiste donc un besoin d'optimisation de la conception des redresseurs de compresseur, de manière à limiter les perturbations aérodynamiques sur la veine primaire, tout en réduisant les risques d'apparition de criques sur les têtes des aubes de stator.

### EXPOSÉ DE L'INVENTION

Pour répondre au moins partiellement à ce besoin, l'invention a pour objet un redresseur pour compresseur de turbomachine d'aéronef, ledit redresseur comportant une virole intérieure, une virole extérieure ainsi que des aubes de stator solidaires des viroles intérieure et extérieure, ledit redresseur comportant en outre un flasque solidaire d'une extrémité aval de la virole extérieure et destiné à être fixé sur un carter de compresseur, ledit flasque étant équipé d'orifices de prélèvement d'air espacés les uns des autres selon une direction circonférentielle du redresseur. Selon l'invention, au moins l'un des orifices de prélèvement d'air présente une forme étirée selon la direction circonférentielle.

L'invention prévoit avantageusement d'associer, à au moins un orifice de prélèvement d'air, une fonction supplémentaire de déchargement mécanique des aubes de stator. En effet, grâce à sa forme étirée circonférentiellement, l'orifice de prélèvement permet de décharger sensiblement le bord de fuite de la tête d'aube se trouvant radialement en regard de cet orifice. En outre, puisque ces orifices de prélèvement sont situés sur le flasque en dehors de la veine primaire, et non plus sur la virole extérieure délimitant cette même veine comme dans l'art antérieur, le flux primaire n'est pas pertubé par la présence de ces moyens de déchargement mécanique.

De plus, l'emploi d'orifices déjà existants simplifie et accélère le procédé de fabrication. A cet égard, il est indiqué qu'en remplaçant un ou plusieurs orifices circulaires existants, par un orifice étiré circonférentiellement, permet de conserver une même superficie d'ouverture et donc un même débit de prélèvement. De plus, avec l'invention, il est parfaitement possible de conserver la position radiale existante des orifices de prélèvement, propice à un écoulement satisfaisant du débit d'air les traversant. Comme cela sera détaillé ci-après, les orifices de prélèvement sont placés en regard, radialement vers l'extérieur, des aubes les plus chargées mécaniquement.

L'invention prévoit par ailleurs au moins l'une des caractéristiques additionnelles suivantes, prises isolément ou en combinaison.

Ledit au moins un orifice de prélèvement présente une forme oblongue ou globalement rectangulaire.

Ledit au moins un orifice de prélèvement présente une dimension circonférentielle Dc ainsi qu'une dimension radiale Dr, et le rapport entre les dimensions Dc et Dr est compris entre 1,5 et 4.

Le flasque est équipé d'orifices de prélèvement de forme étirée selon la direction circonférentielle, ainsi que d'orifices de prélèvement de forme circulaire. Alternativement, tous les orifices pourraient être de forme étirée circonférentiellement, en supprimant l'ensemble des orifices circulaires.

L'invention a également pour objet un secteur de redresseur pour compresseur de turbomachine d'aéronef, ledit secteur de redresseur comportant un secteur de virole intérieure, un secteur de virole extérieure ainsi que des aubes de stator solidaires des secteurs de viroles intérieure et extérieure, ledit redresseur comportant en outre un secteur de flasque solidaire d'une extrémité aval du secteur de virole extérieure et destiné à être fixé sur un carter de compresseur, ledit secteur de flasque étant équipé d'au moins un orifice de prélèvement d'air. Selon l'invention, ledit orifice de prélèvement d'air est agencé de façon centrée sur le secteur de flasque selon une direction circonférentielle du secteur de redresseur, et présente une forme étirée selon cette direction circonférentielle. Cela permet de décharger mécaniquement l'aube centrale du secteur de redresseur, qui est l'une des plus chargées d'un point de vue statique / dynamique. Dans ce cas de figure, le secteur de flasque peut éventuellement être équipé d'au moins un autre orifice de prélèvement d'air, de forme circulaire ou de forme étirée circonférentiellement.

Les deux autres aubes les plus chargées sont celles agencées aux extrémités circonférentielles du secteur de redresseur. Ainsi, l'invention a également pour objet un secteur de redresseur pour compresseur de turbomachine d'aéronef, ledit secteur de redresseur comportant un secteur de virole intérieure, un secteur de virole extérieure ainsi que des aubes de stator solidaires des secteurs de viroles intérieure et extérieure, ledit redresseur comportant en outre un secteur de flasque solidaire d'une extrémité aval du secteur de virole extérieure et destiné à être fixé sur un carter de compresseur. Selon l'invention, ledit secteur de flasque comporte une première extrémité circonférentielle ainsi qu'une seconde extrémité circonférentielle opposée à la première, ladite première extrémité comportant une première portion d'un orifice de prélèvement d'air et ladite seconde extrémité comportant une seconde portion d'un autre orifice de prélèvement d'air, les première et seconde portions d'orifices étant chacune ouverte vers l'extérieur selon une direction circonférentielle du secteur de redresseur, et la somme des dimensions circonférentielles Dc₁, Dc₂ des première et seconde portions d'orifices est supérieure à la dimension radiale Dr de chacune de celles-ci. Par conséquent, lorsque deux secteurs de redresseur sont agencés bout-à-bout, il se forme à leur jonction un orifice de prélèvement étiré circonférentiellement, qui permet de décharger les deux aubes d'extrémité agencées en regard.

Eventuellement, ledit secteur de flasque est également équipé d'un orifice de prélèvement d'air agencé de façon centrée selon la direction circonférentielle, et présentant une forme étirée selon cette direction circonférentielle de façon à décharger l'aube centrale du secteur de redresseur. Alternativement ou simultanément, un ou plusieurs orifices de prélèvement d'air circulaires pourraient être réalisés à travers le secteur de flasque, entre lesdites première et seconde portions d'orifices prévues aux extrémités de ce secteur.

L'invention a également pour objet un ensemble comprenant un premier secteur de redresseur ainsi qu'un second secteur de redresseur se présentant chacun selon la conception décrite ci-dessus, les premier et second secteurs de redresseur étant agencés bout-à-bout de sorte que la seconde extrémité circonférentielle du premier secteur de redresseur soit juxtaposée à la première extrémité circonférentielle du second secteur de redresseur, et de sorte que ledit orifice de prélèvement d'air formé conjointement par la seconde portion d'orifice du premier secteur de redresseur et la première portion d'orifice du second secteur de redresseur, présente une forme étirée selon la direction circonférentielle. Comme indiqué précédemment, cela permet de décharger mécaniquement les deux aubes d'extrémité agencées en regard, au niveau de la jonction entre les deux secteurs de redresseur.

L'ensemble est préférentiellement conçu de sorte que ledit orifice de prélèvement soit centré selon la direction circonférentielle par rapport à un couple de bords de fuite d'extrémité formé d'une part à l'aide d'un bord de fuite de l'aube de stator située à la seconde extrémité circonférentielle du premier secteur de redresseur, et d'autre part à l'aide d'un bord de fuite de l'aube de stator située à la première extrémité circonférentielle du second secteur de redresseur. Pour aboutir à un tel agencement lorsque les deux bords de fuite d'extrémité d'un même secteur ne sont pas agencés symétriquement par rapport à un plan médian de ce secteur, les première et seconde portions d'orifices présentent de préférence des dimensions circonférentielles Dc₁, Dc₂ différentes. Alternativement, ces dimensions Dc₁ et Dc₂ peuvent être identiques, sans sortir du cadre de l'invention.

Enfin, l'invention a pour objet une turbomachine d'aéronef comprenant un compresseur équipé d'au moins un tel redresseur, ou d'au moins un tel secteur de redresseur, ou d'un moins un tel ensemble de deux secteurs de redresseur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en coupe longitudinale d'une turbomachine d'aéronef selon l'invention ;
- la figure 2 représente une vue partielle en coupe longitudinale du compresseur haute pression équipant la turbomachine montrée sur la figure précédente ;
- la figure 3 est une vue en perspective d'un secteur de redresseur destiné à former une partie d'un redresseur du compresseur haute pression montré sur la figure précédente, le secteur se présentant sous la forme d'un premier mode de réalisation préféré ;
- la figure 4 est une vue partielle de face du secteur de redresseur montré sur la figure précédente ;
- la figure 5 est une vue analogue à celle de la figure 3, avec le secteur de redresseur se présentant sous la forme d'un second mode de réalisation préféré ;
- la figure 6 montre un ensemble de deux secteurs de redresseur du type de celui montré sur la figure 5, agencés bout-à-bout ;
- la figure 7 représente une vue arrière agrandie de la jonction entre les deux secteurs de redresseur montrés sur la figure précédente ; et
- la figure 8 est une vue analogue à celle de la figure 3, avec le secteur de redresseur se présentant sous la forme d'un troisième mode de réalisation préféré.

### EXPOSÉ DÉTAILLÉ DE MODES DE RÉALISATION PRÉFÉRÉS

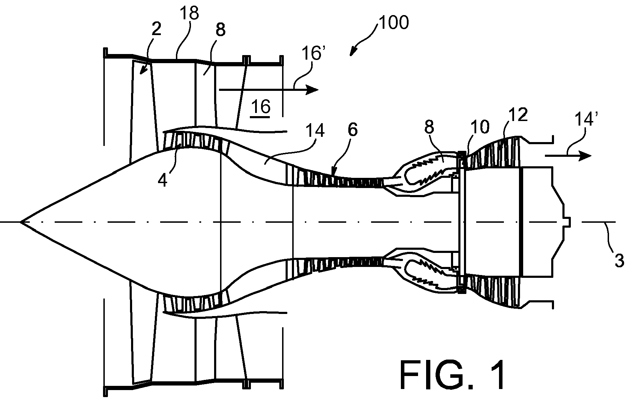

En référence tout d'abord à la figure 1, il est représenté une turbomachine 100 d'aéronef, destinée à intégrer l'invention. Il s'agit ici d'un turboréacteur à double flux et à double corps. Néanmoins, il pourrait s'agir d'une turbomachine d'un autre type, par exemple un turbopropulseur, sans sortir du cadre de l'invention.

La turbomachine 1 présente un axe longitudinal 3 autour duquel s'étendent ses différents composants. Elle comprend, d'amont en aval selon une direction principale d'écoulement des gaz à travers cette turbomachine, une soufflante 2, un compresseur basse pression 4, un compresseur haute pression 6, une chambre de combustion 8, une turbine haute pression 10 et une turbine basse pression 12. Ces éléments délimitent une veine primaire 14 traversée par un flux primaire 14', tandis qu'une veine secondaire 16 entoure la veine primaire en étant délimitée partiellement par un carter de soufflante 18 et traversée par un flux d'air secondaire 16'.

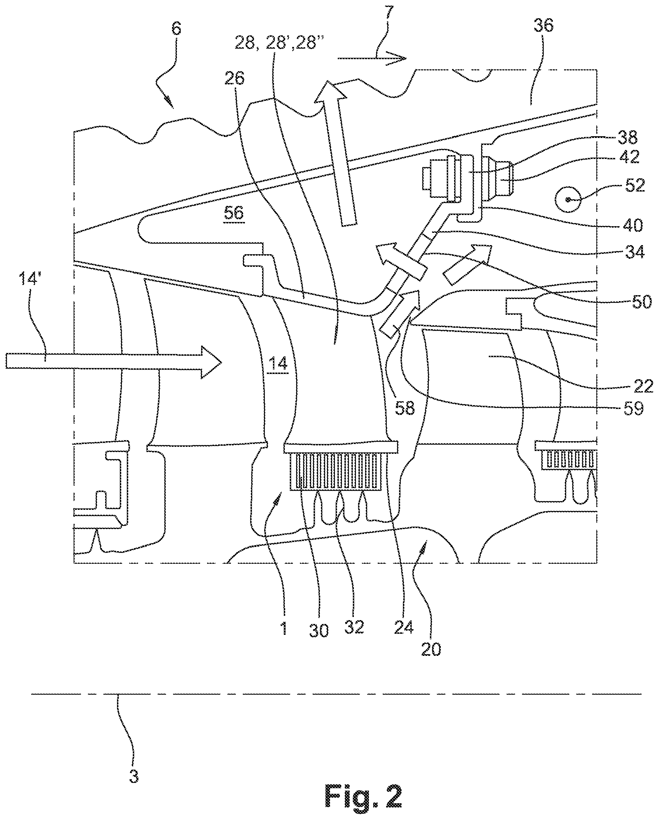

La figure 2 montre une partie du compresseur haute pression 6, et en particulier son troisième étage formé par un redresseur 1 selon l'invention, ainsi que par une roue mobile 20 portant des aubes de rotor 22. La roue mobile 20 est située en aval du redresseur 1, en rapport avec une direction principale 7 d'écoulement du flux primaire 14' à travers le redresseur.

Le redresseur 1 comporte une virole intérieure 24 ainsi qu'une virole extérieure 26, toutes les deux centrées sur l'axe 3. A cet égard, il est noté que les termes « intérieur » et « extérieur » sont à considérer de façon conventionnelle, c'est-à-dire par rapport à l'axe 3. Le redresseur comprend également des aubes de stator 28, 28', 28" réparties circonférentiellement et solidarisées aux viroles 24, 26. De manière également conventionnelle, chaque pale d'aube présente une face intrados et une face extrados, ainsi qu'un bord d'attaque en amont et un bord de fuite en aval.

Plus précisément, le pied de chaque aube 28, 28', 28" est solidaire de la virole intérieure 24, tandis que la tête est solidaire de la virole extérieure 26. Il s'agit préférentiellement d'une pièce unique obtenue par fonderie, par exemple par fonderie à cire perdue.

La virole intérieure 24 porte intérieurement un revêtement abradable 30 coopérant avec des léchettes 32 solidaires en rotation de la roue mobile 20. Les léchettes 32 et le revêtement abradable 30 forment ensemble, de manière conventionnelle, un joint à labyrinthe.

Le redresseur 1 comporte en outre un flasque 34 servant à sa fixation sur un carter de compresseur 36. Le flasque 34 est solidaire d'une extrémité aval de la virole extérieure 26, par exemple réalisée d'une seule pièce avec cette virole. A son extrémité radiale extérieure, le flasque 34 présente une bride 38 servant à sa fixation par boulons 42 sur une bride 40 solidaire du carter de compresseur 36. Les boulons 42 traversent ainsi des orifices de fixation pratiqués à travers les brides 38, 40, celles-ci étant orientées sensiblement transversalement. La partie centrale du flasque 34 est orientée de façon inclinée par rapport aux directions axiale et radiale de la turbomachine. Elle est par ailleurs équipée d'orifices de prélèvement d'air 50, espacés les uns des autres selon une direction circonférentielle 52 du redresseur 1. Dans le cas présent, les orifices de prélèvement 50 ouvrent l'accès à une cavité annulaire 56 délimitée par la virole extérieure 26, le carter de compresseur 36 et le flasque 34. Il est noté que contrairement à la virole extérieure 26, le flasque 34 ne participe pas à la délimitation de la veine primaire 14.

En fonctionnement, un faible débit d'air 58 s'échappe de la veine primaire 14 en transitant par le jeu axial 59 entre le redresseur et la roue mobile directement consécutive vers l'aval. Ensuite, le débit d'air prélevé peut circuler à travers les orifices de prélèvement 50 du flasque, puis rejoindre d'autres éléments de la turbomachine en vue de leur ventilation et/ou de leur alimentation en air, afin de garantir le bon fonctionnement de la turbomachine.

Comme cela sera détaillé ci-après, l'une des particularités de l'invention réside dans la forme étirée de tout ou partie des orifices de prélèvement 50, selon la direction circonférentielle 52.

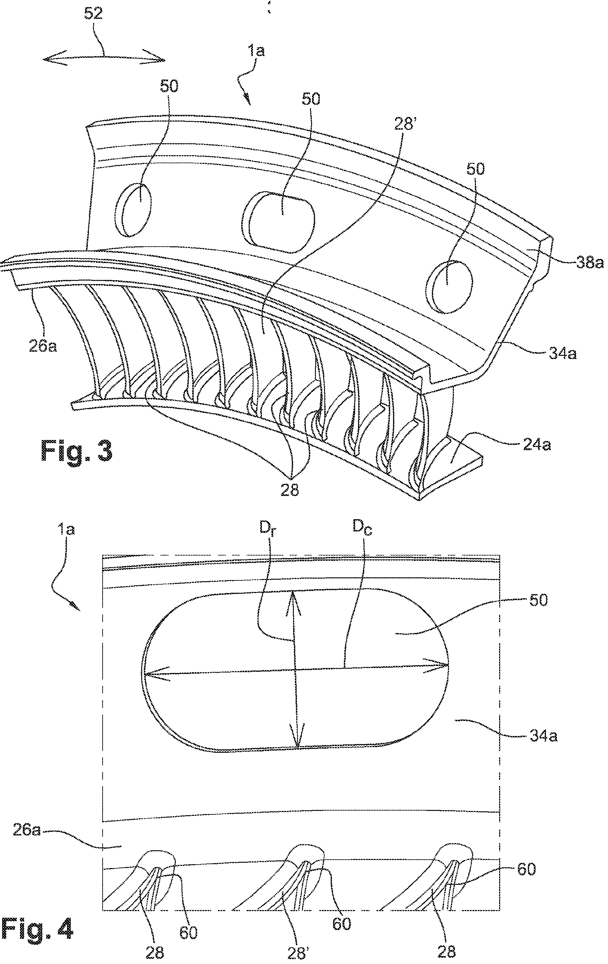

Les figures 3 et 4 représentent un secteur de redresseur la selon un premier mode de réalisation préféré de l'invention. Ce secteur la est destiné à former une portion angulaire ou circonférentielle du redresseur 1. En d'autres termes, le redresseur 1 est destiné à être formé par l'assemblage bout-à-bout de plusieurs secteurs la du type de celui qui va à présent être décrit, et qui sont chacun réalisé de préférence d'une seule pièce par fonderie, par exemple par fonderie à cire perdue.

Le secteur la comporte un secteur de virole intérieure 24a ainsi qu'un secteur de virole extérieure 26a, tous les deux centrés sur l'axe 3. Il comprend également des aubes de stator 28, 28', 28" réparties circonférentiellement et solidarisées aux viroles 24a, 26a, ces aubes étant par exemple prévues dans un nombre entre cinq et vingt.

Le secteur de redresseur la comporte en outre un secteur de flasque 34a servant à sa fixation sur un carter de compresseur. Le secteur de flasque 34a est solidaire d'une extrémité aval du secteur de virole extérieure 26a, comportant un secteur de bride de fixation 38a à son extrémité radiale extérieure. Bien que cela n'ait pas été représenté, le secteur de bride 38a sert à la fixation par boulons du secteur de redresseur la, sur le carter de compresseur.

La partie centrale du secteur de flasque 34 est équipée d'orifices de prélèvement d'air 50, par exemple trois orifices espacés les uns des autres selon la direction circonférentielle 52 du redresseur 1.

Les deux orifices 50 situés proches des extrémités du secteur de redresseur la sont par exemple de forme conventionnelle, circulaire. En revanche, l'orifice de prélèvement 50 centré sur le secteur de flasque selon la direction circonférentielle 52 présente une forme étirée selon cette même direction. Par forme étirée, il est entendu que l'orifice de prélèvement d'air 50 adopte une dimension circonférentielle Dc qui est supérieure à sa dimension radiale Dr. Le rapport entre les dimensions Dc et Dr peut être compris entre 1,5 et 4, par exemple de manière à présenter une forme oblongue, ou globalement rectangulaire avec les angles arrondis.

L'orifice de prélèvement central 50 est plus précisément centré par rapport à un bord de fuite 60 de l'aube centrale du secteur la, référencée 28'. En d'autres termes, cet orifice 50 s'étend de part et d'autre du bord de fuite 60 selon une demi-dimension circonférentielle Dc/2. Par bord de fuite, il est entendu la partie du bord de fuite située en tête de la pale de l'aube, à la jonction avec la virole extérieure 26a.

Cet agencement permet de décharger de façon satisfaisante cette aube centrale 28', qui s'avère être l'une des plus chargées mécaniquement en fonctionnement. Cette manière de procéder au déchargement de l'aube 28' est avantageuse en ce qu'elle permet de maintenir une section identique de prélèvement d'air en remplaçant deux ou davantage d'orifices de prélèvement circulaires en un seul orifice 50, étiré circonférentiellement. Elle est également avantageuse en ce qu'elle ne perturbe pas l'écoulement du flux primaire 14' dans la veine 14, et en ce que le positionnement radial des orifices 50 peut être conservé par rapport à l'existant.

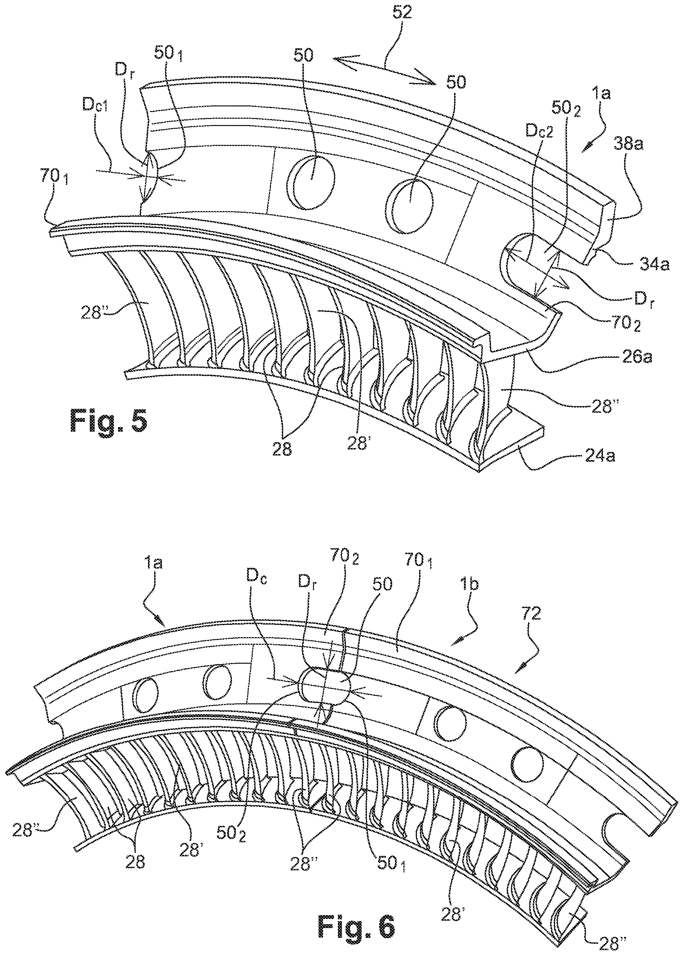

Selon un second mode de réalisation montré sur la figure 5, le secteur de flasque la comporte une première extrémité circonférentielle 70₁ ainsi qu'une seconde extrémité circonférentielle 70₂ opposée à la première selon la direction circonférentielle 52. La première extrémité 70₁ comporte une première portion 50₁ d'un orifice de prélèvement d'air, et la seconde extrémité 70₂ comporte une seconde portion 50₂ d'un autre orifice de prélèvement d'air. Ces deux portions 50₁, 50₂ sont chacune ouverte vers l'extérieur selon la direction circonférentielle 52. Elles présentent respectivement des dimensions circonférentielles Dc₁, Dc₂ dont la somme est supérieure à la dimension radiale Dr de chacune de celles-ci. Il est noté que le rapport entre la somme des dimensions circonférentielles Dc₁ et Dc₂, et la dimension Dᵣ, est préférentiellement compris entre 1,5 et 4.

Dans le cas présent, les deux dimensions circonférentielles Dc₁, Dc₂ sont différentes, la seconde étant plus élevée que la première.

Le secteur de redresseur la peut ici comprendre également deux orifices de prélèvement d'air 50, de forme circulaire.

La figure 6 montre un ensemble 72 correspondant à l'assemblage d'un premier secteur de redresseur la agencé bout-à-bout avec un second secteur de redresseur, référencé 1b et présentant une conception identique ou analogue à celle du premier secteur la. A cet égard, il est noté que les extrémités en regard 70₁, 70₂ sont juxtaposées, également dites adjacentes, mais elles ne sont préférentiellement pas fixées directement l'une sur l'autre. En effet, la fixation des deux secteurs la, 1b s'effectue sur le même carter, ce qui permet l'obtention d'une fixation indirecte entre ces extrémités en regard.

Une fois assemblés, il se forme à la jonction entre les deux secteurs la, 1b un orifice de prélèvement d'air 50 de forme étirée circonférentiellement. Cet orifice 50 est formé conjointement par la seconde portion 50₂ du premier secteur la ainsi que par la première portion 50₁ du second secteur 1b, ces deux portions étant de forme complémentaire. L'orifice 50 présente alors une dimension circonférentielle Dc correspondant à la somme des dimensions circonférentielles Dc₁, Dc₂, ainsi qu'une dimension radiale Dᵣ.

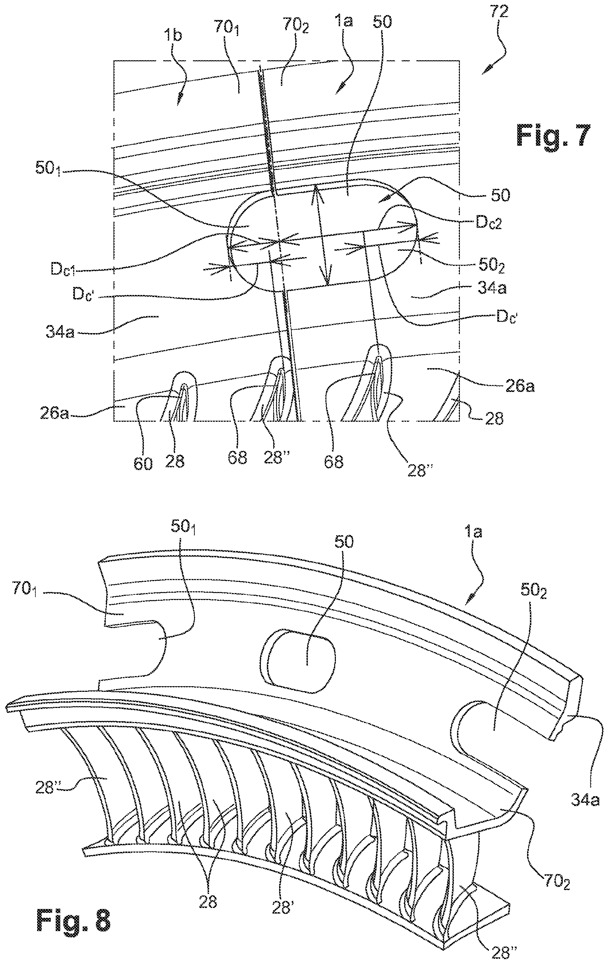

L'ensemble 72 est conçu de façon à ce que l'orifice recomposé 50 de prélèvement d'air soit centré selon la direction circonférentielle 52 par rapport à un couple de bords de fuite d'extrémité 68. Ce couple, montré sur la figure 7, est formé d'une part à l'aide d'un bord de fuite 68 de l'aube de stator 28" située à la seconde extrémité circonférentielle 70₂ du premier secteur de redresseur la, et d'autre part à l'aide d'un bord de fuite 68 de l'aube de stator 28" située à la première extrémité circonférentielle 70₁ du second secteur 1b.

L'orifice de prélèvement 50, situé radialement en regard de ce couple de bords de fuite 68, s'étend ainsi circonférentiellement de part de d'autre de ce couple selon deux dimensions circonférentielles Dc', sensiblement identiques. Cela permet de décharger de façon satisfaisante les deux aubes d'extrémité 28", qui s'avèrent aussi très chargées mécaniquement.

Enfin, le secteur de redresseur la représenté sur la figure 8 correspond à un troisième mode de réalisation, combinant les premier et second modes. Il comprend donc un orifice de prélèvement central 50 étiré circonférentiellement, auquel s'ajoutent une première portion 50₁ d'un orifice de prélèvement d'air pratiquée sur la première extrémité 70₁, et une seconde portion 50₂ d'un autre orifice de prélèvement d'air prévue sur la seconde extrémité 70₂. Dans ce troisième mode de réalisation, les portions 50₁, 50₂ peuvent être de longueurs circonférentielles identiques ou différentes.

Bien entendu, diverses modifications peuvent être apportées par l'homme du métier à l'invention qui vient d'être décrite, uniquement à titre d'exemples non limitatifs.

## Revendications

1. Redresseur (1) pour compresseur de turbomachine d'aéronef, ledit redresseur comportant une virole intérieure (24), une virole extérieure (26) ainsi que des aubes de stator (28, 28', 28") solidaires des viroles intérieure et extérieure, ledit redresseur comportant en outre un flasque (34) solidaire d'une extrémité aval de la virole extérieure (26) et destiné à être fixé sur un carter de compresseur (36), ledit flasque étant équipé d'orifices de prélèvement d'air (50) espacés les uns des autres selon une direction circonférentielle (52) du redresseur,
**caractérisé en ce qu'**au moins l'un des orifices de prélèvement d'air (50) présente une forme étirée selon la direction circonférentielle (52).

2. Redresseur selon la revendication précédente, **caractérisé en ce que** ledit au moins un orifice de prélèvement (50) présente une forme oblongue ou globalement rectangulaire.

3. Redresseur selon l'une quelconque des revendications précédentes, **caractérisé en ce que** ledit au moins un orifice de prélèvement (50) présente une dimension circonférentielle Dc ainsi qu'une dimension radiale Dr, et **en ce que** le rapport entre les dimensions Dc et Dr est compris entre 1,5 et 4.

4. Redresseur selon l'une quelconque des revendications précédentes, **caractérisé en ce que** le flasque (34) est équipé d'orifices de prélèvement (50) de forme étirée selon la direction circonférentielle (52), ainsi que d'orifices de prélèvement (50) de forme circulaire.

5. Secteur de redresseur (1a) pour compresseur de turbomachine d'aéronef, ledit secteur de redresseur comportant un secteur de virole intérieure (24a), un secteur de virole extérieure (26a) ainsi que des aubes de stator (28, 28', 28") solidaires des secteurs de viroles intérieure et extérieure, ledit secteur de redresseur comportant en outre un secteur de flasque (34a) solidaire d'une extrémité aval du secteur de virole extérieure (26a) et destiné à être fixé sur un carter de compresseur (36), ledit secteur de flasque (34a) étant équipé d'au moins un orifice de prélèvement d'air (50),
**caractérisé en ce que** ledit orifice de prélèvement d'air (50) est agencé de façon centrée sur le secteur de flasque (34a) selon une direction circonférentielle (52) du secteur de redresseur, et présente une forme étirée selon cette direction circonférentielle.

6. Secteur de redresseur selon la revendication précédente, **caractérisé en ce que** le secteur de flasque (34a) est également équipé d'au moins un autre orifice de prélèvement d'air (50) de forme circulaire.

7. Secteur de redresseur (1a) pour compresseur de turbomachine d'aéronef, ledit secteur de redresseur comportant un secteur de virole intérieure (24a), un secteur de virole extérieure (26a) ainsi que des aubes de stator (28, 28', 28") solidaires des secteurs de viroles intérieure et extérieure, ledit secteur de redresseur comportant en outre un secteur de flasque (34a) solidaire d'une extrémité aval du secteur de virole extérieure (26a) et destiné à être fixé sur un carter de compresseur (36),
**caractérisé en ce que** ledit secteur de flasque comporte une première extrémité circonférentielle (70₁) ainsi qu'une seconde extrémité circonférentielle (70₂) opposée à la première, ladite première extrémité comportant une première portion (50₁) d'un orifice de prélèvement d'air et ladite seconde extrémité comportant une seconde portion (50₁) d'un autre orifice de prélèvement d'air, les première et seconde portions d'orifices (50₁, 50₂) étant chacune ouverte vers l'extérieur selon une direction circonférentielle (52) du secteur de redresseur, et **en ce que** la somme des dimensions circonférentielles Dc₁, Dc₂ des première et seconde portions d'orifices (50₁, 50₂) est supérieure à la dimension radiale Dr de chacune de celles-ci.

8. Secteur de redresseur selon la revendication précédente, **caractérisé en ce que** ledit secteur de flasque (34a) est également équipé d'un orifice de prélèvement d'air (50) agencé de façon centrée selon la direction circonférentielle (52) et présentant une forme étirée selon cette direction circonférentielle, ou **en ce que** ledit secteur de flasque (34a) est également équipé d'un ou plusieurs orifices de prélèvement d'air (50) de forme circulaire.

9. Ensemble (72) comprenant un premier secteur de redresseur (1a) ainsi qu'un second secteur de redresseur (1b) se présentant chacun selon l'une quelconque des revendications 7 et 8, les premier et second secteurs de redresseur (1a, 1b) étant agencés bout-à-bout de sorte que la seconde extrémité circonférentielle (70₂) du premier secteur de redresseur (1a) soit juxtaposée à la première extrémité circonférentielle (70₁) du second secteur de redresseur (1b), et en ce que ledit orifice de prélèvement d'air (50) formé conjointement par la seconde portion d'orifice (50₂) du premier secteur de redresseur et la première portion d'orifice (50₁) du second secteur de redresseur, présente une forme étirée selon la direction circonférentielle (52), l'ensemble (72) étant préférentiellement conçu de sorte que ledit orifice de prélèvement (50) soit centré selon la direction circonférentielle par rapport à un couple de bords de fuite d'extrémité (38) formé d'une part à l'aide d'un bord de fuite (68) de l'aube de stator (28") située à la seconde extrémité circonférentielle (70₂) du premier secteur de redresseur (1a), et d'autre part à l'aide d'un bord de fuite (68) de l'aube de stator (28") située à la première extrémité circonférentielle (70₁) du second secteur de redresseur (1b).

10. Turbomachine (100) d'aéronef comprenant un compresseur (6) équipé d'au moins un redresseur (1) selon l'une quelconque des revendications 1 à 4, ou d'au moins un secteur de redresseur (1a) selon l'une quelconque des revendications 5 à 6, ou d'au moins un secteur de redresseur (1a) selon l'une quelconque des revendications 7 et 8, ou d'au moins un ensemble (72) selon la revendication 9.

## Patentansprüche

1. Statoranordnung (1) für Turbomaschinenverdichter eines Flugzeugs, wobei die genannte Statoranordnung einen Innenring (24) und einen Außenring (26) sowie fest mit dem Innen- und dem Außenring verbundene Leitschaufeln (28, 28', 28") umfasst, wobei die genannte Statoranordnung außerdem einen fest mit einem nachgelagerten Rand des Außenrings (26) verbundenen Flansch (34) umfasst, der für die Befestigung an einem Verdichtergehäuse (36) vorgesehen ist, wobei der genannte Flansch mit Luftabsaugungsöffnungen (50) versehen ist, die mit Abstand zueinander in Umfangsrichtung (52) der Statoranordnung angeordnet sind,
**dadurch gekennzeichnet, dass** mindestens eine der Luftabsaugungsöffnungen (50) eine in Umfangsrichtung gestreckte Form (52) aufweist.

2. Statoranordnung gemäß dem vorstehenden Anspruch, **dadurch gekennzeichnet, dass** die genannte mindestens eine Absaugungsöffnung (50) eine längliche oder im Wesentlichen rechteckige Form aufweist.

3. Statoranordnung gemäß einem der vorstehenden Ansprüche, **dadurch gekennzeichnet, dass** die genannte mindestens eine Luftabsaugungsöffnung (50) eine Abmessung in Umfangsrichtung Dc und eine Abmessung in radialer Richtung Dr aufweist und dass das Verhältnis zwischen den Abmessungen Dc und Dr zwischen 1,5 und 4 liegt.

4. Statoranordnung gemäß einem der vorstehenden Ansprüche, **dadurch gekennzeichnet, dass** der Flansch (34) mit Absaugungsöffnungen (50) mit in Umfangsrichtung (52) gestreckter Form sowie mit kreisförmigen Absaugungsöffnungen (50) versehen ist.

5. Statoranordnungssegment (1a) für Turbomaschinenverdichter eines Flugzeugs, wobei das genannte Statoranordnungssegment ein Innenringsegment (24a), ein Außenringsegment (26a) sowie fest mit dem Innen- und dem Außenringsegment verbundene Leitschaufeln (28, 28', 28") umfasst, wobei das genannte Statoranordnungssegment außerdem ein fest mit einem nachgelagerten Rand des Außenringsegments (26a) verbundenes Flanschsegment (34a) umfasst, das für die Befestigung an einem Verdichtergehäuse (36) vorgesehen ist, wobei das genannte Flanschsegment (34a) mit mindestens einer Luftabsaugungsöffnung (50) versehen ist,
**dadurch gekennzeichnet, dass** die genannte Luftabsaugungsöffnung (50) in Umfangsrichtung (52) des Statoranordnungssegments zentral auf dem Flanschsegment (34a) angeordnet ist und eine in dieser Umfangsrichtung gestreckte Form aufweist.

6. Statoranordnungssegment gemäß dem vorstehenden Anspruch, **dadurch gekennzeichnet, dass** das Flanschsegment (34a) ebenfalls mit mindestens einer weiteren kreisförmigen Luftabsaugungsöffnung (50) versehen ist.

7. Statoranordnungssegment (1a) für Turbomaschinenverdichter eines Flugzeugs, wobei das genannte Statoranordnungssegment ein Innenringsegment (24a), ein Außenringsegment (26a) sowie fest mit dem Innen- und dem Außenringsegment verbundene Leitschaufeln (28, 28', 28") umfasst, wobei das genannte Statoranordnungssegment außerdem ein fest mit einem nachgelagerten Rand des Außenringsegments (26a) verbundenes Flanschsegment (34a) umfasst, das für die Befestigung an einem Verdichtergehäuse (36) vorgesehen ist,
**dadurch gekennzeichnet, dass** das genannte Flanschsegment einen ersten umlaufenden Rand (70₁) sowie einen zweiten, dem ersten gegenüberliegenden umlaufenden Rand (70₂) umfasst, wobei der genannte erste Rand einen ersten Teil (50₁) einer Luftabsaugungsöffnung und der genannte zweite Rand einen zweiten Teil (50₁) einer anderen Luftabsaugungsöffnung umfasst und der erste und der zweite Öffnungsteil (50₁, 50₂) jeweils in einer Umfangsrichtung (52) des Statoranordnungssegments nach außen hin geöffnet sind, sowie dadurch, dass die Summe der Abmessungen in Umfangsrichtung Dc₁, Dc₂ des ersten und zweiten Öffnungsteils (50₁, 50₂) größer ist als die Abmessung in radialer Richtung Dr jedes dieser beiden.

8. Statoranordnungssegment gemäß dem vorstehenden Anspruch, **dadurch gekennzeichnet, dass** das genannte Flanschsegment (34a) ebenfalls mit einer Luftabsaugungsöffnung (50) versehen ist, die in Umfangsrichtung (52) zentral angeordnet ist und eine in dieser Umfangsrichtung gestreckte Form aufweist, oder dadurch, dass das genannte Flanschsegment (34a) ebenfalls mit einer oder mehreren kreisförmigen Luftabsaugungsöffnungen (50) versehen ist.

9. Konstruktion (72), die ein erstes Statoranordnungssegment (1a) sowie ein zweites Statoranordnungssegment (1b) umfasst, die jeweils Anspruch 7 oder 8 entsprechen, wobei die Enden des ersten und des zweiten Statoranordnungssegments (1a, 1b) aneinander anliegen, sodass der zweite umlaufende Rand (70₂) des ersten Statoranordnungssegments (1a) an dem ersten umlaufenden Rand (70₁) des zweiten Statoranordnungssegments (1b) anliegt, sowie dadurch, dass die genannte, aus dem zweiten Öffnungsteil (50₂) des ersten Statoranordnungssegments und dem ersten Öffnungsteil (50₁) des zweiten Statoranordnungssegment gebildete Luftabsaugungsöffnung (50) eine in Umfangsrichtung (52) gestreckte Form aufweist, wobei die Konstruktion (72) vorzugsweise so konzipiert ist, dass die genannte Absaugungsöffnung (50) in Umfangsrichtung relativ zu einem Hinterkantenpaar (38) zentriert ist, das zum einen aus einer Hinterkante (68) der Leitschaufel (28") am zweiten umlaufenden Rand (70₂) des ersten Statoranordnungssegments (1a) und zum anderen aus einer Hinterkante (68) der Leitschaufel (28") am ersten umlaufenden Rand (70₁) des zweiten Statoranordnungssegments (1b) gebildet wird.

10. Turbomaschine (100) für ein Luftfahrzeug, die einen Verdichter (6) mit mindestens einer Statoranordnung (1) gemäß einem der Ansprüche 1 bis 4 oder mit mindestens einem Statoranordnungssegment (1a) gemäß Anspruch 5 oder 6 oder mit mindestens einem Statoranordnungssegment (1a) gemäß Anspruch 7 oder 8 oder mit mindestens einer Konstruktion (72) gemäß Anspruch 9 umfasst.

## Claims

1. A rectifier (1) for an aircraft turbomachine compressor, said rectifier comprising an inner ferrule (24), an outer ferrule (26) and stator vanes (28, 28', 28") rigidly connected to the inner and outer ferrules said rectifier further comprising a flange (34) rigidly connected to a downstream end of the outer ferrule (26) and for attachment to a compressor casing (36), said flange being provided with air intake ports (50) spaced from each other in a circumferential direction (52) of the rectifier,
**characterized in that** at least one of the air intake ports (50) has a shape stretched in the circumferential direction (52).

2. A rectifier according to the preceding claim, **characterized in that** said at least one intake port (50) has an oblong or generally rectangular shape.

3. A rectifier according to any one of the preceding claims, **characterized in that** said at least one intake port (50) has a circumferential dimension Dc and a radial dimension Dr, and **in that** the ratio between the dimensions Dc and Dr is between 1.5 and 4.

4. A rectifier according to any one of the preceding claims, **characterized in that** the flange (34) is provided with intake ports (50) that are oblong in the circumferential direction (52), as well as circular intake ports (50).

5. A rectifier sector (1a) for an aircraft turbomachine compressor, said rectifier sector having an inner ferrule sector (24a), an outer ferrule sector (26a) as well as stator vanes (28, 28', 28") rigidly connected to the inner and outer ferrule sectors, said rectifier sector further comprising a flange sector (34a) rigidly connected to a downstream end of the outer ferrule sector (26a) and intended to be attached to a compressor housing (36), said flange sector (34a) being provided with at least one air intake port (50),
**characterized in that** said air intake port (50) is centrally disposed on the flange sector (34a) in a circumferential direction (52) of the rectifier sector, and has a shape oblong along said circumferential direction.

6. A rectifier sector according to the preceding claim, **characterized in that** the flange sector (34a) is also equipped with at least one other circular air intake port (50.

7. A rectifier sector (1a) for an aircraft turbomachine compressor, said rectifier sector having an inner ferrule sector (24a), an outer ferrule sector (26a) as well as stator vanes (28, 28', 28") rigidly connected to the inner and outer ferrule sectors, said rectifier sector further comprising a flange sector (34a) rigidly connected to a downstream end of the outer ferrule sector (26a) and intended to be attached to a compressor housing (36),
**characterized in that** said flange sector has a first circumferential end (70₁) and a second circumferential end (70₂) opposite the first end, said first end having a first portion (50₁) of an air intake port and said second end having a second portion (50₁) of another air intake port, the first and second port portions (50₁, 50₂) each being open outwardly in a circumferential direction (52) of the rectifier sector, and **in that** the sum of the circumferential dimensions Dc₁, Dc₂ of the first and second portions of the ports (50₁, 50₂) is greater than the radial dimension Dr of each of them.

8. A rectifier sector according to the preceding claim, **characterized in that** said flange sector (34a) is also equipped with an air intake port (50) arranged centrally in the circumferential direction (52) and having an oblong shape in the circumferential direction, or **in that** said flange sector (34a) is also equipped with one or more circular air bleed ports (50.

9. An assembly (72) comprising a first rectifier sector (1a) and a second rectifier sector (1b) each of which according to any one of claims 7 and 8, the first and second rectifier sectors (1a, 1b) being arranged end-to-end so that the second circumferential end (70₂) of the first rectifier sector (1a) is juxtaposed with the first circumferential end (70₁) of the second rectifier sector (1b), and in that said air intake port (50) jointly formed by the second port portion (50₂) of the first rectifier sector and the first port portion (50₁) of the second rectifier sector has an oblong shape in the circumferential direction (52), the assembly (72) being preferably designed so that said intake port (50) is centred in the circumferential direction with respect to a pair of end trailing edges (38) formed, on the one hand, by a trailing edge (68) of the stator vane (28") located at the second circumferential end (70₂) of the first rectifier sector (1a), and, on the other hand, by a trailing edge (68) of the stator vane (28") located at the first circumferential end (70₁) of the second rectifier sector (1b).

10. An aircraft turbomachine (100) comprising a compressor (6) equipped with at least one rectifier (1) according to any one of claims 1 to 4, or at least one rectifier sector (1a) according to one of any of claims 5 to 6, or at least one rectifier sector (1a) according to any one of claims 7 and 8, or at least one assembly (72) according to claim 9.
